Europäisches Patentamt

European Patent Office

Office européen des brevets

(19)

(11) Publication number: **0 093 015**
**B1**

(12) **EUROPEAN PATENT SPECIFICATION**

(45) Date of publication of patent specification: **06.08.86**

(21) Application number: **83302360.9**

(22) Date of filing: **26.04.83**

(51) Int. Cl.⁴: **B 65 G 47/84, B 21 D 43/18, B 23 Q 7/02**

(54) Method and apparatus for handling hollow cylindrical articles such as metal containers.

(30) Priority: **27.04.82 GB 8212163**

(43) Date of publication of application:
**02.11.83 Bulletin 83/44**

(45) Publication of the grant of the patent:
**06.08.86 Bulletin 86/32**

(84) Designated Contracting States:
**BE DE FR GB IT NL SE**

(56) References cited:
**DE-A-2 456 934**
**DE-A-2 817 825**
**GB-A-1 489 746**
**GB-A-1 498 795**
**GB-A-1 571 807**
**US-A-2 687 202**
**US-A-3 279 599**
**US-A-3 339 698**

(73) Proprietor: **CLEAMAX LIMITED**
**35 The Causeway**
**Pottersbar Hertfordshire (GB)**

(72) Inventor: **Jackson, John Maxwell**
**35 The Causeway**
**Potters Bar Hertfordshire (GB)**

(74) Representative: **McCulloch, Norman Little et al**
**Mathys & Squire 10 Fleet Street**
**London EC4Y 1AY (GB)**

## Description

This invention relates to a method and apparatus for transferring hollow articles having cylindrical side walls, such as for example hollow cylindrical metal containers open at one end, between two stations, and is concerned more particularly with a method and apparatus for catching and orientating hollow articles which have been ejected axially by air pressure from holding devices such as mandrels or chambers.

Machines for manufacturing or treating metal containers in mass production commonly comprise a turntable or turret fitted with holding devices for the containers, the turntable being rotatable at high speed intermittently or continuously past loading and unloading stations. It is common practice in machines of this type for the containers to be ejected axially from the holding devices by a timed blast of air so as to engage the containers against a plate rotated or indexed in unison with the turntable of the machine. The containers are held to the plate by the use of magnetic or suction devices so that they can be carried clear of the machine for discharge onto a conveyor or runway. With such machines the noise on impact of the containers with the magnetic or suction devices is considerable, and it is difficult to dampen this noise even with cushioning material because the containers are drum like structures which tend to generate sound when even the slightest impact occurs on the base.

Factory noise is a matter of growing concern in the container making industry, and the object of the present invention is to provide a method and apparatus for transferring hollow articles having cylindrical side walls between two stations by pneumatic pressure without undue shock or impact on the articles.

According to the present invention there is provided a method of transferring a hollow article having a cylindrical side wall from an unloading station to a receiving station, comprising positioning the article in the unloading station with the axis of the article aligned in the direction of the receiving station, ejecting the article from the unloading station in the axial direction of the article towards the receiving station, and arresting the article at the receiving station (such a method, as defined in the precharacterising portion of claim 1, is already known per se), characterised in that the article is ejected by pneumatic pressure and arrested at the receiving station by drawing the article by suction upon arrival at the receiving station to bring the cylindrical side wall of the article into frictional sliding contact with a part-cylindrical surface adapted to engage as a close fit around part of the cylindrical side wall of the article so as to hold the article against said surface.

According to the invention there is also provided an apparatus for transferring a hollow article having a cylindrical side wall from an unloading station to a receiving station, comprising a holding device adapted to locate the article in a predetermined position in the unloading station with the axis of the article aligned in the direction of the receiving station, means for ejecting the article from said predetermined position in the unloading station in the axial direction of the article towards the receiving station, and a receiving device adapted to arrest the axial movement of the article upon arrival at the receiving station (such an apparatus, as defined in the precharacterising portion of claim 6, is already known per se), characterised in that the means for ejecting the article is a pneumatic pressure means and the receiving device has a part-cylindrical surface extending approximately parallel to the axial direction of the article in said predetermined position, said surface being adapted to engage around part of the cylindrical side wall of the article as a close fit, and suction means operable to draw the article by suction upon arrival at the receiving station to bring the cylindrical wall of the article into frictional sliding contact with the part-cylindrical surface of the receiving device and hold the article against said surface.

The present invention enables the noise factor in container making machines to be substantially reduced, by bringing each container to rest gradually, when ejected, using the friction between the side wall and the shaped receiving device against which it is held by the suction means, thus avoiding impact with the base.

The position at which the container finally comes to rest is dependent on air and vacuum pressures and machine speed, so that the final positions of succeeding containers tends to vary. This inconsistency may cause problems when the containers are released onto the output conveyor at very high speeds of operation, and means may be provided for limiting this variation and for bringing the containers back to a constant position with the open end very close to a conveyor surface. For example, the machine may be provided with an abutment for stopping the axial movement of the containers after their speed has been substantially reduced by frictional sliding contact with the part-cylindrical surface of the receiving device. In a case in which the receiving device is a turret, cam guides may be provided to adjust the position of the containers upon rotation of the turret. In this way, precise control of the movements of the containers can be achieved over a range of machine speeds and without precise air pressure controls.

It has been found in practice that apparatus according to the invention need require only about half the air pressure used for some conventional container-making machines carrying out the same operations, thereby resulting in lower energy requirements and less noise from the air blast itself.

The present invention is very suitable for use with machines as described in British Patent Specifications Nos. 1498795, 1571807 and 1591158 all relating to continuously rotating high speed container cleaning and treating machines.

2

One form of the invention is also applicable to machines in which the turret rotates intermittently from station to station. A machine of this type for printing and drying metal containers is described in British Patent Specification No. 1489746.

The invention will now be described with reference to the drawings in which:—

Figure 1 is a plan view of apparatus according to the invention applied to a machine for handling hollow cylindrical containers and having an intermittently rotating turret such as that described in British Patent Specification No. 1489746 (or in the corresponding specifications of Swedish Patent Application 7416182-9, German Patent Application P24 59 588.8, Dutch Patent Application 74.16686, Belgium Patent 823667, French Patent Application 7442358, or Italian Patent Application 30833 A/74).

Figure 2 is a section through the unloading station on the line X—X in Figure 1 with a container on a mandrel about to be ejected by compressed air.

Figure 3 is a section on the same line showing a container which has been released into a discharge chute and the following container as it is brought to rest by the receiving device.

Figure 4 is a view in direction of arrow B in Figure 2.

Figure 5 is an elevation in direction of arrow B in Figure 6 showing the invention applied to a machine for handling hollow cylindrical containers and having a continuously rotating turret of the type described in British Patent Specification No. 1498795 (or in the corresponding specifications of Swedish Patent Application 7503225-0, German Patent Application P25 11 548.4, Dutch Patent Application 75.03423, Belgium Patent 826964, French Patent 7508785, or Italian Patent 1034466).

Figure 6 is a section on the line Z—Z in Figure 5 and 7.

Figure 7 is a section on the line Y—Y in Figure 6 showing a drive mechanism synchronising the rotation of a main turret with rotation of a receiving turret, and a mechanism for ensuring accurately positioned containers at the instant of transfer to a discharge conveyor, and

Figure 8 is a side elevation of the receiving turret showing guide means for correcting the position of the containers.

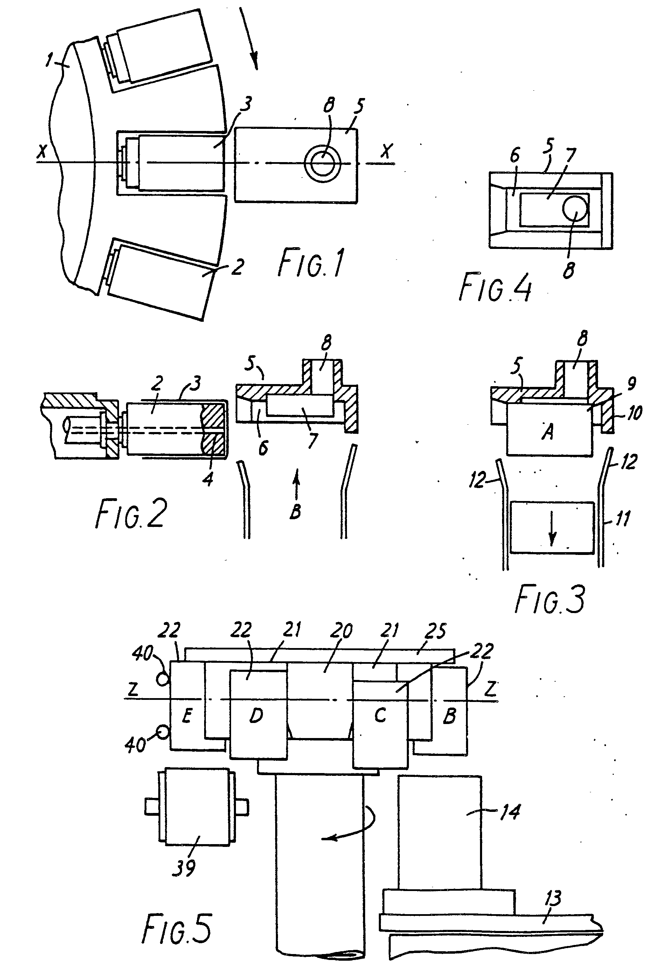

Referring to Figures 1—4 of the drawings, an intermittently rotating turret 1 carries a number of mandrels 2 which hold hollow cylindrical containers 3 retained in position by vacuum applied through a conduit 4 in each mandrel during the processing sequences of the machine, the turret 1 being rotatable into index positions in which each mandrel in succession is in register with an unloading station, with the container on the mandrel in a predetermined position at the unloading station. A container receiving device 5 is positioned at a receiving station adjacent the unloading station. The receiving device has a part-cylindrical surface 6 shaped to be a close fit around part of the cylindrical wall of each container 3, and the receiving device is positioned with the axis of curvature of the surface 6 approximately in line with the central axis of each mandrel when it is in register with the unloading station.

A recess 7 is formed in the part-cylindrical surface 6, and a port 8 opens into the recess for evacuation of air therefrom by a suction system (not shown). A valve system actuated by the indexing mechanism of the machine (not shown) connects the port 8 and recess 7 to the suction system when the turret is in the stationary indexed position and to atmosphere when the turret is rotating.

At each index position of the turret, the container 3 on the mandrel 2 which is in register with the unloading station is forcibly ejected from the mandrel by compressed air supplied to the conduit 4. The container is ejected in the axial direction of the mandrel, which as explained previously is in line with the axis of curvature of the part-cylindrical surface 6 on the receiving device, so that the container moves across the receiving device in close proximity to the surface 6. At the index position of the turret, the suction means is evacuating air from the recess 7 and thereby inducing a flow of air into the recess to replace the evacuated air. When the container reaches the position A shown in Figure 3, the corner 9 of the container closes off the recess, thereby stopping the flow of air into the recess and immediately generating a vacuum in the recess. Suction is thus applied suddenly to the part of the cylindrical wall of the container covering the whole area of the recesss 7 so as to draw the container into frictional sliding contact with the curved surface 6 of the container receiving device and thereby bring it to rest with very little sound. When the turret rotates again to bring the next mandrel to the unloading station, the valve system disconnects the recess 7 from the suction system and opens the recess to atmosphere so that the container falls into a discharge chute 11. The exact position of each arrested container depends on the eject air pressure and the intensity of the suction system. To allow for some variation the open end 12 of the discharge chute is splayed out and an abutment 10 is provided to limit the travel of the container in extreme cases.

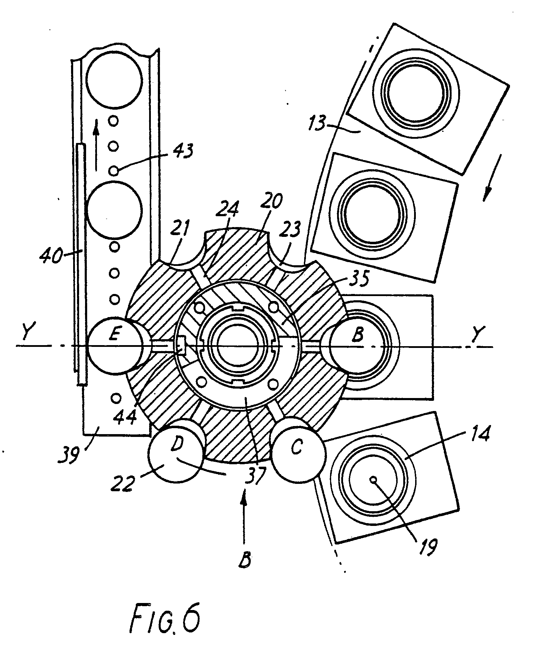

Figures 5—8 show the application of the invention to a machine having a continuously rotating turret of the type described in our British Specification No. 1498795. This machine comprises a main turret 13 carrying a number of holding devices 14 spaced at equal intervals around the turret and each having an open-topped annular cavity adapted to hold a hollow cylindrical container 22 with the axis of the container approximately parallel to the rotational axis of the turret 13, the turret being rotatable to pass the holding devices 14 in succession through an unloading station, and a receiving turret 20 rotatable about an axis parallel to the rotational axis of the main turret 13. The receiving turret 20 has six part-cylindrical surfaces 21 spaced at equal intervals around the turret and shaped to be a close fit around part of the cylindrical wall of a container 22, the axes of curvature of the surfaces 21 being parallel to and spaced at equal distances from the rotational axis of the receiving turret. The receiving turret is rotatable to pass each part-cylindrical surface 21 in succession through a receiving station in which the surface 21 is arranged to receive a container ejected from a holding device 14 at the unloading station. Each part-cylindrical surface 21 has a recess 23, a suction port 24 and an abutment plate 25 similar to the recess 7, port 8 and abutment 10 of the arrangement of Figures 1—4.

The receiving turret 20 is attached by screws 16 to a sleeve 26 which in turn is secured to a gear 27 by screws 28, and the assembly of the turret, sleeve and gear is rotatably mounted on a tubular stationary shaft 51 by a ball bearing 18 at the upper end and by a journal bearing 30 at the lower end of the shaft 51. The shaft 51 is secured to the frame 17 of the machine by screws 29. The pitch circle diameter of gear 27 is substantially the same as the pitch circle diameter on which lie the axes of curvature of the surfaces 21. The gear 27 is in mesh with a large ring gear 31 secured to the underside of the main turret 13 by screws 32, and the holding devices 14 are secured to the main turret 13 in spaced relationship with their centres lying on substantially the same pitch circle diameter as the ring gear 31. In this way the turrets 13, 20 are caused to rotate in unison, with each part-cylindrical surface 21 on the receiving turret passing through the receiving station at the same time and at the same velocity as a holding device 14 on the main turret is passing through the unloading station.

The receiving turret is provided with suction valve means comprising a collar 33 clamped to the stationary shaft 51 by a locking ring 34, and a cylindrical valve hub 35 secured to the collar 33 by screws 36, the hub being engaged as a close running fit within an internal cylindrical bore in the receiving turret. The hub has a central chamber 38 which is connected through the central passageway in the tubular shaft 51 with suction means (not shown), and the side wall of the hub is formed with a slot 37 (Figure 6) which allows suction from the chamber 38 to be applied to the ports 24 whilst the turret is rotating, the slot 37 covering an angle of approximately 150°, and with a further slot 44 arranged to connect each recess 23 to atmosphere when the associated part-cylindrical surface 21 is at a discharge station.

A take-off belt conveyor 39 having a series of holes 43 in the belt and guide rails 40 extends through the discharge station. The belt passes over a suction box 41 connected to a suction fan system (not shown) and a longitudinal slot 42 in the box 41 is arranged to apply suction to the holes 43 in the belt so that containers dropped onto the belt are held by suction and thereby steadied as they are conveyed away from the machine.

In operation the main turret 13 is rotated in a counter clockwise direction as viewed in Figure 6 to bring the holding devices, loaded with containers, successively to the unloading station. As explained previously, a part-cylindrical surface 21 on the receiving turret is in register with the receiving station whenever a holding device is at the unloading station, and the recess 23 in the part-cylindrical surface is connected to the suction means through its port 24, the slot 37, chamber 38 and the central passageway in the shaft 51. Just before each holding device reaches the unloading station, valve mechanism (not shown) applies compressed air to a conduit 19 in the holding device to eject its container rapidly from the cavity in the holding device. The container then slides up the part-cylindrical surface 21 at the receiving station, and is brought to rest at the position B (Figure 5) by the friction imposed on the cylindrical wall of the container as the air flow is shut off and the suction force is developed in the recess 23.

When the container carried by the receiving turret reaches the discharge station shown at E in Figure 6, the port 24 associated with the part-cylindrical surface carrying the container comes into alignment with the slot 44, thereby releasing the suction in the recess 23 and causing the container to drop onto the belt conveyor. The rails 40 guide the container onto the belt. It will be appreciated that some variation in positioning of the containers on the receiving turret will arise, as shown by the containers at positions B, C, D and E in Figure 5, but this is permissible for normal operating conditions, and the extreme high position of a container is of course limited by the abutment plate 25.

It will also be appreciated that when the machine is running at high speed centrifugal force will tend to throw the containers into sliding contact with the part-cylindrical surfaces at the receiving station at position B, thus adding to the reliability of the transfer. Also, at position E centrifugal force will tend to throw containers out of contact with the receiving turret and against the guide rails 40, thereby again increasing the reliability of the system.

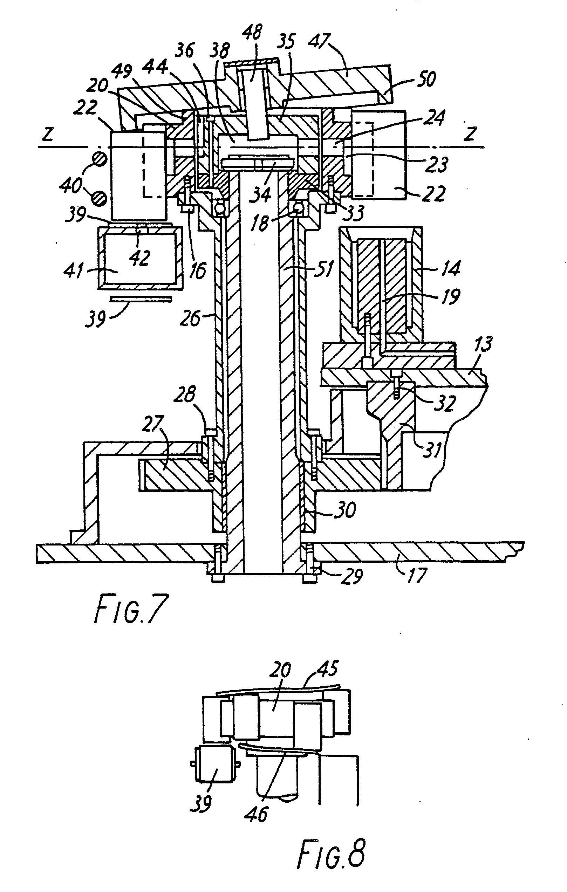

For high speed operation, the receiving turret is preferably provided with a heavy swash plate 47, as shown in Figure 7, for guiding the containers to a position directly above the belt conveyor upon rotation of the turret. The swash plate 47 is freely rotatable on an inclined shaft 48 which is secured in the top of the valve hub 35, the swash plate being in running contact with an annular flange 49 on the turret 20. The swash plate is thus driven at substantially the same peripheral speed as the receiving turret. The underside of the plate 47 is formed with an annular flange 50 arranged to position the containers progressively as the turret rotates so as to bring the lower edge of each container into close proximity to the belt conveyor upon arrival at position E. This guide system is particularly suitable for use with a machine adapted to provide a surface coating to containers, since there is no rubbing action of the swash plate on the base of the container.

Figure 8 shows an alternative positioning system which comprises stationary cam guides 45 and 46 arranged to engage the ends of the containers upon rotation of the receiving turret and guide the containers into a position just above the belt conveyor upon arrival at the discharge station.

**Claims**

1. A method of transferring a hollow article having a cylindrical side wall from an unloading station to a receiving station, comprising positioning the article in the unloading station with the axis of the article aligned in the direction of the receiving station, ejecting the article from the unloading station in the axial direction of the article towards the receiving station, and arresting the article at the receiving station, characterised in that the article (3) is ejected by pneumatic pressure and arrested at the receiving station by drawing the article by suction upon arrival at the receiving station to bring the cylindrical side wall of the article into frictional sliding contact with a part-cylindrical surface (6) adapted to engage as a close fit around part of the cylindrical side wall of the article so as to hold the article against said surface (6).

2. A method as claimed in claim 1, characterised in the axial movement of the article (3) is slowed down by the frictional sliding contact with said part-cylindrical surface (6), and the axial movement of the article is finally arrested by abutment against a stop plate (10).

3. A method as claimed in claim 1 or 2, characterised in that said part-cylindrical surface (6) is formed on a receiving device (5) having a recess (7) surrounded by said surface (6), the recess (7) being adapted to be covered by the cylindrical side wall of the article (3) when the article is engaged against said surface (6), and air is evacuated from the recess (7), the arrangement being such that the cylindrical side wall of the article progressively covers the recess (7) as the article (3) moves along the part-cylindrical surface (6) so that suction is generated rapidly in the recess (7) as the recess is finally closed off by the article.

4. A method as claimed in claim 3, characterised in that the receiving device (5) is formed with an outlet (8) which communicates with said recess (7) adjacent the end thereof which is the last to be covered by the article (3) during its axial movement, and the air is evacuated from the recess (7) through said outlet (8).

5. A method of transferring a succession of hollow cylindrical articles of the same size from an unloading station to a receiving station in which each article is transferred by the method as claimed in claim 3 or 4, characterised in that the recess (7) in the part-cylindrical surface (6) on the receiving device (5) is connected to a source of air in timed sequence to ejection of the articles (3) from the unloading station so as to release the suction and allow the article to fall into a discharge system (11, 39).

6. Apparatus for transferring a hollow article having a cylindrical side wall from an unloading station to a receiving station, comprising a holding device adapted to locate the article in a predetermined position in the unloading station with the axis of the article aligned in the direction of the receiving station, means for ejecting the article from said predetermined position in the unloading station in the axial direction of the article towards the receiving station, and a receiving device adapted to arrest the axial movement of the article upon arrival at the receiving station, characterised in that the means for ejecting the article is a pneumatic pressure means and the receiving device (5) has a part-cylindrical surface (6) extending approximately parallel to the axial direction of the article (3) in said predetermined position, said surface (6) being adapted to engage around part of the cylindrical side wall of the article as a close fit, and suction means (7, 8) operable to draw the article (3) by suction upon arrival at the receiving station to bring the cylindrical wall of the article (3), into frictional sliding contact with the part-cylindrical surface (6) of the receiving device and hold the article (3) against said surface (6).

7. Apparatus as claimed in claim 6, characterised in that the receiving device (5) has a recess (7) surrounded by said part-cylindrical surface (6), the recess (7) being adapted to be covered by the cylindrical side wall of the article when the article is engaged against said surface (6), and said suction means comprises an outlet duct (8) communicating with the recess (7) and means for evacuating air from the recess (7) through said outlet duct (8).

8. Apparatus as claimed in claim 7, characterised in that said outlet duct (8) opens into the recess (7) at the end thereof remote from the holding device (2) at the unloading station.

9. Apparatus as claimed in any of claims 6 to 8 and suitable for transferring from the unloading station to a conveyor a plurality of hollow articles of the same size having cylindrical side walls, the apparatus including a plurality of said holding devices mounted on a turret (13) which is rotatable to pass each holding device in succession through said unloading station, each holding device having means for ejecting an article thereon in the axial direction of the article towards the receiving station upon indexing of the holding device at the unloading station, characterised in that the means for ejecting an article is a pneumatic pressure means, said receiving device (5) is positioned directly over a conveyor (11), said suction means (7, 8) being operable to draw the article by suction upon arrival at the receiving device (5) to bring the cylindrical wall of the article into frictional sliding contact with with said part-cylindrical surface (6) so as to hold the article against said surface (6), and means are operable to release the suction, whereby the article in the receiving device falls onto the conveyor.

10. Apparatus as claimed in claim 9, characterised in that said conveyor comprises a chute (11) having a flared mouth (12) arranged to receive articles falling from the receiving device (5).

11. Apparatus as claimed in claim 10, characterised in that the receiving device (5) is provided with an abutment (10) arranged to arrest finally the axial movement of said article (3) at a position at which the article can fall into said chute (11).

12. Apparatus as claimed in any of claims 6 to 8 and suitable for transferring from the unloading station to a conveyor a plurality of hollow articles of the same size having cylindrical side walls, the apparatus including a plurality of said holding devices (14) mounted on a main turret 13 which is rotatable to pass each holding device in succession through said unloading station, each holding device having means for ejecting an article thereon in the axial direction of the article towards the receiving station upon indexing of the holding device at the unloading station, characterised in that the means for ejecting an article is a pneumatic pressure means, said receiving device comprises a receiving turret (20) rotatably mounted about an axis substantially parallel to the rotational axis of the main turret (13), the receiving turret (20) having at least one part-cylindrical surface (21) adapted to engage around part of the cylindrical wall of each article (22) as a close fit, the centre line of the radius of curvature of the or each part-cylindrical surface (21) being substantially parallel to the rotational axis of the receiving turret (20), and the receiving turret (20) being rotatable to pass the or each part-cylindrical surface (21) through said receiving station in which the part-cylindrical surface (21) is arranged to receive an article (22) ejected from a holding device (14) at the unloading station, the or each part-cylindrical surface (21) also passing through a discharge station above a conveyor (39) upon rotation of the receiving turret (20), means for continuously rotating said turrets (13, 20) in synchronism such that when a holding device (14) on the main turret (13) is at the unloading station the or a part-cylindrical surface (21) on the receiving turret (20) is at the receiving station, and suction means operable to draw each article (22) by suction upon arrival at the receiving station to bring the cylindrical wall of the article into frictional sliding contact with said part-cylindrical surface (21) so as to hold the article against said surface, and means operable to release the suction upon further angular movement of the receiving turret (20) to a position in which the part-cylindrical surface (21) carrying the article (22) is in said discharge station so that the article falls onto said conveyor (39).

13. Apparatus as claimed in claim 12, characterised in that stationary cam guides (45) are arranged to engage an article (22) held by the suction means against the part-cylindrical surface (21) and effect axial movement of the article into a predetermined position above the conveyor (39) upon angular movement of the receiving turret (20) to register the part-cylindrical surface (21) at the discharge station.

14. Apparatus as claimed in claim 12, characterised in that a swash plate (47) rotatable with the receiving turret (20) and arranged to engage an article (22) held by the suction means against the part-cylindrical surface (21) and effect axial movement of the article into a predetermined position above the conveyor (39) upon angular movement of the receiving turret (20) to register the part-cylindrical surface (21) at the discharge station.

**Revendications**

1. Procédé de transfert d'un objet creux à paroi latérale cylindrique, d'une station de déchargement à une station de réception, qui consiste à placer l'objet dans la station de déchargement de sorte que l'axe de l'objet soit aligné dans la direction de la station de réception, à éjecter l'objet de la station de déchargement dans la direction axiale de l'objet vers la station de réception, et à arrêter l'objet à la station de réception, caractérisé en ce que l'objet (3) est éjecté par pression pneumatique et arrêté à la station de réception par attraction de l'objet par succion lors de l'arrivée à la station de réception, de manière à amener la paroi latérale cylindrique de l'objet en contact de frottement glissant avec une surface cylindrique partielle (6) prévue pour s'ajuster étroitement autour d'une partie de la paroi latérale cylindrique de l'objet, afin de retenir l'objet contre ladite surface (6).

2. Procédé suivant la revendication 1, caractérisé en ce que le mouvement axial de l'objet (3) est ralenti par le contact de frottement glissant avec ladite surface cylindrique partielle (6) et le mouvement axial de l'objet est finalement arrêté par butée contre une plaque d'arrêt (10).

3. Procédé suivant la revendication 1 ou 2, caractérisé en ce que ladite surface cylindrique partielle (6) est formée sur un dispositif de réception (5) comportant un évidement (7) entouré par ladite surface (6), l'évidement (7) étant prévu pour être recouvert par la paroi latérale cylindrique de l'objet (3) lorsque l'objet est en contact avec ladite surface (6), et l'air est évacué de l'évidement (7), la disposition étant telle que la paroi latérale cylindrique de l'objet recouvre progressivement l'évidement (7) lorsque l'objet (3) se déplace le long de la surface cylindrique partielle (6) de sorte qu'une succion est rapidement engendrée dans l'évidement (7) lorsque l'évidement est finalement obturé par l'objet.

4. Procédé suivant la revendication 3, caractérisé en ce que le dispositif de réception (5) comporte un orifice (8) qui communique avec l'évidement (7), près de son extrémité qui est la dernière à être recouverte par l'objet (3) pendant le mouvement axial de celui-ci, et l'air est évacué de l'évidement (7) par ledit orifice (8).

5. Procédé de transfert d'une succession d'objets cylindriques creux de même dimension, d'une station de déchargement à une station de réception, dans lequel chaque objet est transféré par le procédé suivant la revendication 3 ou 4, caractérisé en ce que l'évidement (7) ménagé dans la surface cylindrique partielle (6) du dispositif de réception (5) est relié à une source d'air en séquence de temps avec l'éjection des objets (3) de la station de déchargement, de façon à supprimer la succion et à permettre à l'objet de tomber dans un système d'évacuation (11, 39).

6. Appareil pour le transfert d'un objet creux à paroi latérale cylindrique, d'une station de déchargement à une station de réception, comprenant un dispositif de maintien prévu pour placer l'objet dans une position prédéterminée à la station de déchargement, l'axe de l'objet étant aligné dans la direction de la station de réception, des moyens d'éjection de l'objet de ladite position prédéterminée dans la station de déchargement, dans la direction axiale de l'objet vers la station de réception, et un dispositif de réception prévu pour arrêter le mouvement axial de l'objet lorsqu'il arrive à la station de réception, caractérisé en ce que les moyens d'éjection de l'objet sont des moyens à pression pneumatique et le dispositif de réception (5) présente une surface cylindrique partielle (6) sensiblement parallèle à la direction axiale de l'objet (3) dans la dite position prédéterminée, cette surface (6) pouvant venir en contact autour d'une partie de la paroi latérale cylindrique de l'objet en ajustement étroit, et des moyens d'aspiration (7, 8) agissent pour attirer l'objet (3) par succion à son arrivée à la station de réception, de manière à amener la paroi cylindrique de l'objet (3) en contact de frottement glissant avec la surface cylindrique partielle (6) du dispositif de réception et à retenir l'objet (3) contre ladite surface (6).

7. Appareil suivant la revendication 6, caractérisé en ce que le dispositif de réception (5) comporte un évidement (7) entouré par ladite surface cylindrique partielle (6), l'évidement (7) étant prévu pour être recouvert par la paroi latérale cylindrique de l'objet lorsque l'objet est appliqué contre ladite surface (6), et les moyens d'aspiration comprennent un conduit de sortie (8), qui communique avec l'évidement (7), et des moyens pour évacuer l'air de l'évidement (7) par l'intermédiaire de ce conduit de sortie (8).

8. Appareil suivant la revendication 7, caractérisé en ce que le conduit de sortie (8) débouche dans l'évidement (7) à l'extrémité de celui-ci qui est éloignée du dispositif de maintien (2) à la station de déchargement.

9. Appareil suivant l'une quelconque des revendications 6 à 8, approprié au transfert, de la station de déchargement à un transporteur, d'une pluralité d'objets creux de même dimension à paroi latérale cylindrique, l'appareil comprenant une pluralité des dispositifs de maintien montés sur une tourelle (13) qui peut tourner de manière à ce que chaque dispositif de maintien traverse successivement la station de déchargement, chaque dispositif de maintien comportant des moyens d'éjection d'un objet dans la direction axiale de l'objet vers la station de réception lors de l'arrêt du dispositif de maintien en coïncidence à la station de déchargement, caractérisé en ce que les moyens d'éjection d'un objet sont des moyens à pression pneumatique, le dispositif de réception (5) est situé directement au-dessus d'un transporteur (11), les moyens d'aspiration (7, 8) intervenant de manière à attirer l'objet par succion lors de son arrivée au dispositif de réception (5) afin d'amener la paroi cylindrique de l'objet en contact de frottement glissant avec ladite surface cylindrique partielle (6) pour retenir l'objet contre cette surface (6), et des moyens interviennent pour supprimer la succion, de sorte que l'objet dans le dispositif de réception tombe sur le transporteur.

10. Appareil suivant la revendication 9, caractérisé en ce que le transporteur comprend une goulotte de chute (11) à embouchure évasée (12) disposée pour recevoir les objets qui tombent du dispositif de réception (5).

11. Appareil suivant la revendication 10, caractérisé en ce que le dispositif de réception (5) comporte une butée (10) prévue pour arrêter finalement le mouvement axial de l'objet (3) à une position dans laquelle l'objet peut tomber dans ladite goulotte de chute (11).

12. Appareil suivant l'une quelconque des revendications 5 à 8, approprié au transfert, d'une station de déchargement à un transporteur, d'une pluralité d'objets creux de la même dimension à parois latérales cylindriques, l'appareil comprenant une pluralité des dispositifs de maintien (14) montés sur une tourelle principale (13) qui peut tourner de sorte que chaque dispositif de maintien traverse successivement la station de déchargement, chaque dispositif de maintien comportant des moyens d'éjection d'un objet dans la direction axiale de l'objet vers la station de réception lorsque le dispositif de maintien coïncide avec la station de déchargement, caractérisé en ce que les moyens d'éjection d'un objet sont des moyens à pression pneumatique, le dispositif de réception comprend une tourelle de réception (20) montée de façon tournante sur un axe sensiblement parallèle à l'axe de rotation de la tourelle principale (13), la tourelle de réception (20) présentant au moins une surface cylindrique partielle (21) qui peut venir en contact à ajustement étroit autour d'une partie de la paroi cylindrique de chaque objet (22), l'axe du rayon de courbure de la ou de chaque surface cylindrique partielle (21) étant sensiblement parallèle à l'axe de rotation de la tourelle de réception (20), et la tourelle de réception (20) pouvant tourner de sorte que la ou chaque surface cylindrique partielle (21) traverse la station de réception dans laquelle la surface cylindrique partielle (21) est disposée de manière à recevoir un objet (22) éjecté d'un dispositif de maintien (14) à la station de déchargement, la ou chaque surface cylindrique partielle (21) passant également par une station d'évacuation au-dessus d'un transporteur (39) lors de la rotation de la tourelle de réception (20), des moyens de mise en rotation continue des tourelles (13, 20) en synchronisme de sorte que, lorsqu'un dispositif de maintien (14) de la tourelle principale (13) se trouve à la station de déchargement, la ou une surface cylindrique partielle (21) de la tourelle de réception (20) se trouve à la station de réception, et des moyens d'aspiration qui fonctionnent pour attirer chaque objet (22) par succion lors de l'arrivée à la station de réception de manière à amener la paroi cylindrique de l'objet en contact de frottement glissant avec la surface cylindrique partielle (21) afin de retenir l'objet contre ladite surface, et des moyens qui agissent pour supprimer la succion lors d'un mouvement angulaire supplémentaire de la tourelle de réception (20) à une position dans laquelle la surface cylindrique partielle (21) portant l'objet (22) se trouve dans la dite station d'évacuation de sorte que l'objet tombe sur le transporteur (39).

13. Appareil suivant la revendication 12, caractérisé en ce que des cames de guidage fixes (45) sont disposées de manière à venir en contact avec un objet (22) tenu par les moyens d'aspiration contre la surface cylindrique partielle (21) et à effectuer un mouvement axial de l'objet dans une position prédéterminée au-dessus du transporteur (39) lors du mouvement angulaire de la tourelle de réception (20) pour amener la surface cylindrique partielle (21) à la station d'évacuation.

14. Appareil suivant la revendication 12, caractérisé en ce qu'une plaque oscillante (47), tournant avec la tourelle de réception (20), est disposée de manière à venir en contact avec un objet (22) tenu par les moyens d'aspiration contre la surface cylindrique partielle (21) et à effectuer un mouvement axial de l'objet dans une position prédéterminée au-dessus du transporteur (39) lors du mouvement angulaire de la tourelle de réception (20) pour amener la surface cylindrique partielle (21) à la station d'évacuation.

**Patentansprüche**

1. Verfahren zum Umsetzen eines hohlen Gegenstandes mit zylindrischer Seitenwand von einer Entladestation zu einer Empfangsstation durch axiales Ausrichten des Gegenstandes in der Entladestation in Richtung zur Empfangsstation, axiales Auswerfen des Gegenstandes in der Entladestation in Richtung Empfangsstation und Festhalten des Gegenstandes an der Empfangsstation, dadurch gekennzeichnet, daß der Gegenstand (3) durch pneumatischen Druck ausgeworfen und an der Empfangsstation bei seiner Ankunft durch Saugkraft so festgehalten wird, daß die zylindrische Seitenwand des Gegenstandes mit einer teil-zylindrischen Oberfläche (6) in Gleitreibungskontakt kommt und die teil-zylindrische Oberfläche (6) mit engem Sitz an der zylindrischen Seitenwand des Gegenstandes angreift, um ihn festzuhalten.

2. Verfahren nach Anspruch 1, dadurch gekennzeichnet, daß die Axialbewegung des Gegenstandes (3) durch den Reibungsgleitkontakt an der teil-zylindrischen Oberfläche (6) abgebremst und die Axialbewegung des Gegenstandes letztlich durch Anlage an einer Anschlagplatte (10) vollständig beendet wird.

3. Verfahren nach Anspruch 1 oder 2, dadurch gekennzeichnet, daß die teil-zylindrische Oberfläche (6) an einer Aufnahmevorrichtung (5) angebracht ist, welche mit einer Ausnehmung (7) die teil-zylindrische Oberfläche (6) umgibt, wobei die Ausnehmung (7) mit der zylindrischen Seitenwand des Gegenstandes (3) abgedeckt wird, wenn der Gegenstand auf die Oberfläche (6) auftrifft, um dann aus der Ausnehmung (67) die Luft zu evakuieren, wobei die Anordnung so getroffen ist, daß die zylindrische Seitenwand des Gegenstandes nach und nach die Ausnehmung (7) überdeckt, wenn sich der Gegenstand (3) entlang der teil-zylindrischen Oberfläche (6) bewegt mit dem Ziel, daß der Unterdruck in der Ausnehmung (7) sehr schnell ansteigt, wenn sie schließlich vollständig vom Gegenstand verschlossen wird.

4. Verfahren nach Anspruch 3, dadurch gekennzeichnet, daß die Aufnahmevorrichtung (5) mit einem Auslaß (8) versehen ist, welcher mit der Ausnehmung (7) neben dessen Ende in Verbindung steht, welches als letztes von dem Gegenstand (3) abgedeckt wird, wenn sich der letztere Axial bewegt, wobei dann die Luft aus der Ausnehmung (7) durch diesen Auslaß (8) evakuiert wird.

5. Verfahren zum Umsetzen einer Reihe von hohlen zylindrischen Gegenständen gleicher Abmessungen von einer Entladestation zu einer Empfangsstation, wobei jeder einzelne Gegenstand gemäß Verfahren 3 oder 4 bewegt wird, dadurch gekennzeichnet, daß die Ausnehmung (7) in der teil-zylindrischen Oberfläche (6) der Aufnahmevorrichtung (5) im Zeittakt mit dem Auswerfen der Gegenstände (3) von der Entladestation mit einer Druckluftquelle verbunden wird, um den Unterdruck zu beseitigen und dem Gegenstand die Möglichkeit zu geben, in ein Entladesystem (11, 39) zu fallen.

6. Vorrichtung zum Umsetzen eines hohlen Gegenstandes mit zylindrischer Seitenwand von einer Entladestation zu einer Empfangsstation bestehend aus einer Haltevorrichtung, mit der der Gegenstand in der Entladestation in zuvor festgelegter Lage axial ausgerichtet zur Empfangsstation gehalten wird, eine Auswerferanordnung, mit der der Gegenstand aus der zuvor festgelegten Lage in der Entladestation in seiner axialen Richtung zur Empfangsstation gefördert wird, und eine Empfangsvorrichtung, mit die Axialbewegung des Gegenstandes bei Eintreffen an der Empfangsstation unterbunden wird, dadurch gekennzeichnet, daß zum Auswerfen des Gegenstandes ein Luftdruckförderer vorgesehen ist, daß die Aufnahmevorrichtung (5) eine teil-zylindrische Oberfläche (6) aufweist, die sich in der zuvor festgelegten Lage etwa parallel zur Achse des Gegenstandes (3) erstreckt, daß die Oberfläche (6) so ausgebildet ist, daß sie mit engem Sitz an einem Teil der zylindrischen Seitenwand des Gegenstandes angreift, und daß eine Saugvorrichtung (7, 8) vorgesehen ist, welche die Aufgabe hat, den Gegenstand (3) bei Eintreffen an der Empfangsstation mit Saugkraft zu beaufschlagen, um die zylindrische Wand des Gegenstandes (3) in Reibungs-Gleitkontakt mit der teil-zylindrischen Oberfläche (6) der Aufnahmevorrichtung zu bringen und den Gegenstand (3) an der Oberfläche (6) zu halten.

7. Vorrichtung nach Anspruch 6, dadurch gekennzeichnet, daß die Aufnahmevorrichtung (5) eine Ausnehmung (7) aufweist, die von der teil-zylindrischen Oberfläche (6) umgeben ist, wobei die Ausnehmung (7) von der zylindrischen Seitenwand des Gegenstandes abgedeckt werden kann, wenn der Gegenstand auf die Oberfläche (6) auftrifft und daß zur Saugvorrichtung eine Auslaßleitung (8) gehört, die mit der Ausnehmung (7) in Verbindung steht und eine Evakuierung der Luft aus der Ausnehmung (7) ermöglicht.

8. Vorrichtung nach Anspruch 7, dadurch gekennzeichnet, daß die Auslaßleitung (8) in die Ausnehmung (7) an dem Ende einmündet, das von der Haltevorrichtung (2) der Entladestation abgelegen ist.

9. Vorrichtung nach einem der Ansprüche 6 bis 8, welche in der Lage ist, eine Mehrzahl von hohlen Gegenständen gleicher Abmessungen und zylindrischen Seitenwänden von einer Entladestation zu einem Förderer umzusetzen, wobei die Vorrichtung eine Mehrzahl von Haltevorrichtungen auf einem Karussell (13) enthält, welches derart umläuft, daß jede Haltevorrichtung nach der anderen die Entladestation durchläuft und jede Haltevorrichtung Mittel aufweist, um einen dort befindlichen Gegenstand in Axialrichtung des Gegenstandes zur Empfangsstation zu fördern, wenn die Haltevorrichtung an der Entladestation weitergeschaltet wird, dadurch gekennzeichnet, daß zum Auswerfen eines Gegenstandes ein pneumatischer Druckerzeuger vorgesehen ist und sich unmittelbar über einem Förderer (11) die Aufnahmevorrichtung befindet, daß die Saugvorrichtung (7, 8) bedienbar ist, um den Gegenstand beim Eintreffen an der Aufnahmevorrichtung abzuziehen und die zylindrische Wand des Gegenstandes in Reibungskontakt mit der teil-zylindrischen Oberfläche (6) zu bringen, so daß der Gegenstand an der Oberfläche gehalten wird, und daß eine Schaltvorrichtung vorgesehen ist, mit der sich der Unterdruck beseitigen läßt, so daß der Gegenstand an der Empfangsvorrichtung auf den Förderer fällt.

10. Vorrichtung nach Anspruch 9, dadurch gekennzeichnet, daß der Förderer als Rutsche (11) ausgebildet ist, dessen trichterförmige Öffnung (12) die Möglichkeit gibt, die von der Empfangsvorrichtung (5) herunterfallenden Gegenstände aufzunehmen.

11. Vorrichtung nach Anspruch 10, dadurch gekennzeichnet, daß die Empfangsvorrichtung (5) mit einem Anschlag (10) versehen ist, der die Aufgabe hat, die Axialbewegung des Gegenstandes (3) letztlich in einer Stellung unterbrechen, in der der Gegenstand in die Rutsche (11) fallen kann.

12. Vorrichtung nach einem der Ansprüche 6 bis 8, geeignet zum Umsetzen einer Mehrzahl von hohlen Gegenständen gleicher Größe mit zylindrischen Seitenwänden von einer Entladestation zu einem Förderer unter Verwendung einer Mehrzahl von Haltevorrichtungen (14) auf einem Hauptkarussell (13), welches derart umlaufen kann, um jede Haltevorrichtung nach der anderen durch die Entladestation hindurchlaufen zu lassen, wobei jede Haltevorrichtung eine Auswerferanordnung aufweist, mit der ein Gegenstand in seiner Axialrichtung zur Empfangsstation weitergefördert werden kann, bei Weiterschaltung der Haltevorrichtung an der Entladestation, dadurch gekennzeichnet, daß die Auserferanordnung ein pneumatischer Druckerzeuger ist, daß die Empfangsvorrichtung mit einem Empfängerkarussell versehen ist, welches um eine Achse umlaufen kann, die sich im wesentlichen parallel zur Drehachse des Hauptkarussells (13) erstreckt, daß das Empfangskarussel (20) mindestens eine teil-zylindrische Oberfläche (21) aufweist, welches an einem Teil der zylindrischen Wand eines jeden Gegenstandes (22) in engem Sitz angreifen kann, daß die Mittellinie des Krümmungsradius einer oder aller teil-zylindrischen Oberflächen (21) sich im wesentlichen parallel zur Rotationsachse des Empfangskarussells (20) erstrecken, daß das Empfangskarussell derart umlaufen kann, daß eine oder alle teil-zylindrischen Oberflächen (21) durch die Empfangsstation hindurchlaufen, in der die teil-zylindrische Oberfläche (21) angeordnet ist, um einen Gegenstand (22) zu empfangen, der an der Entladestation von einer Haltevorrichtung (14) abgegeben wird, daß die eine oder alle teil-zylindrischen Oberflächen (21) bei Drehung des Empfangskarussells (20) auch oberhalb einers Förderers (39) eine Entladestation durchlaufen, daß ein Synchronantrieb vorgesehen ist, mit dem kontinuierlich die Karussells (13, 20) derart gedreht werden, daß bei Anwesenheit einer Haltevorrichtung (14) des Hauptkarussells an der Entladestation die oder eine teil-zylindrische Oberfläche (21) des Empfangskarussells (20) an der Empfangsstation anwesend ist, daß eine Saugvorrichtung vorgesehen ist, mit der jeder Gegenstand (22) bei Eintreffen an der Empfangsstation mit Unterdruck beaufschlagt wird, um die zylindrische Wand in Reibungsgleitkontakt mit der teil-zylindrischen Oberfläche (21) zu bringen, so daß der Gegenstand an der Oberfläche gehalten wird, und daß eine Schaltvorrichtung vorgesehen ist, mit der bei weiterer Drehbewegung des Empfangskarussells (20) in eine Stellung, in der die teil-zylindrische Oberfläche (21), welche den Gegenstand (22) trägt, in der Entladestation steht, der Unterdruck abgeschaltet wird, so daß der Gegenstand auf den Förderer (39) fällt.

13. Vorrichtung nach Anspruch 12, gekennzeichnet durch stationäre Nockenführungen (45), die die Aufgabe haben, den durch Unterdruck an der teil-zylindrischen Oberfläche (21) gehaltenen Gegenstand (22) zu beaufschlagen und ihn in seiner axialen Richtung in eine zuvor festgelegte Lage oberhalb des Förderers (39) zu bewegen, wenn das Empfangskarussell (20) eine Drehbewegung ausführt durch die die teil-zylindrische Oberfläche (21) an der Entladestation in Ausrichtung gebracht wird.

14. Vorrichtung nach Anspruch 12, gekennzeichnet durch eine Taumelplatte (47), die mit dem Empfangskarussell (20) umläuft und die Aufgabe hat, den durch Unterdruck an der teilzylindrischen Oberfläche (21) gehaltenen Gegenstand (22) zu beaufschlagen und ihn in eine zuvor festgelegt Lage axial zu bewegen, in der der Gegenstand sich oberhalb des Förderers (39) befindet, wenn das Empfangskarussell (20) bei einer weiteren Drehung auf die teil-zylindrische Oberfläche (21) der Entladestation ausgerichtet ist.

FIG.1

FIG.2

FIG.3

FIG.4

FIG.5

FIG.6

FIG.7

FIG.8